Europäisches Patentamt

European Patent Office

Office européen des brevets

(11) Veröffentlichungsnummer: **0 264 402**
**B1**

(12) **EUROPÄISCHE PATENTSCHRIFT**

(45) Veröffentlichungstag der Patentschrift: **18.04.90**

(51) Int. Cl.⁵: **B 65 G 57/06**

(21) Anmeldenummer: **87902404.0**

(22) Anmeldetag: **23.04.87**

(86) Internationale Anmeldenummer:
**PCT/DE87/00180**

(87) Internationale Veröffentlichungsnummer:
**WO 87/06565 05.11.87 Gazette 87/24**

(54) **VORRICHTUNG ZUM STAPELN VON EMPFINDLICHEN PRODUKTEN, INSBESONDERE VON BÜCHERN.**

(30) Priorität: **26.04.86 DE 3614256**

(43) Veröffentlichungstag der Anmeldung:
**27.04.88 Patentblatt 88/17**

(45) Bekanntmachung des Hinweises auf die
Patenterteilung:
**18.04.90 Patentblatt 90/16**

(84) Benannte Vertragsstaaten:
**CH DE FR GB IT LI**

(56) Entgegenhaltungen:
**DE-B-1 081 373**
**FR-A-1 531 662**
**FR-A-2 178 430**
**US-A-3 028 979**

(73) Patentinhaber: **Kolbus GmbH & Co. KG**
**Osnabrücker Strasse 77**
**D-4993 Rahden (DE)**

(73) Patentinhaber: **Leifeld & Lemke Maschinenfabrik**
**GmbH & Co. KG**
**Osnabrücker Strasse 77**
**D-4993 Rahden (DE)**

(72) Erfinder: **RÖSSIG, Manfred**
**Lortzingstrasse 4**
**D-4720 Beckum (DE)**
Erfinder: **BUDDE, Rolf**
**Niederacker 1**
**D-4972 Löhne 4 (DE)**

Courier Press, Leamington Spa, England.

EP 0 264 402 B1

## Beschreibung

Die Erfindung bezieht sich auf eine Vorrichtung zum Stapeln von empfindlichen Produkten, insbesondere von Büchern, Broschüren od. dgl., mit einer Zufuhreinrichtung zur Bildung einer Packgutreihe, mit einer seitlich der Zufuhreinrichtung angeordneten Schiebeplattform, auf die die Packgutreihe mittels eines Abschubelementes aufgeschoben wird und die unter die Zufuhreinrichtung fahrbar ist und dabei die Packgutreihe oder ggf. zu einer Lage auf der Schiebeplattform zusammengesetzte Packgutreihen gegen das feststehende Abschubelement auf eine bereits vorhandene Packgutlage abstreift.

Die Erfindung nimmt hiermit Bezug auf eine Vorrichtung gemäß der Offenlegungsschrift DE-A-31 39 828.

Bedingt durch die zwischen den Produkten und den Auflageflächen auftretende Reibung beim Aufstauen auf der Zufuhreinrichtung, beim Querabschub auf die Schiebeplattform und beim Abschub von der Schiebeplattform können diese bekannten palettiereinrichtungen der Forderung nach einer schonenden Behandlung empfindlicher produkte, wie übereinandergestapelte Bücher oder Broschuren, nicht gerecht werden.

Darüber hinaus läßt sich beim Beladen von Produkten auf Paletten nach einer bestimmten Stapelordnung eine bei der Reihenbildung vorgegebene Formation sowie Ausrichtung durch den Abschiebevorgang von der Zufuhreinrichtung oder von der Schiebeplattform aufgrund der dabei entstehenden Reibkräfte nicht einhalten.

Ziel der Erfindung ist, die Reibkräfte zwischen Auflageflächen und Produkten in Fortfall zu bringen.

Aus der FR-A-2 178 434 ist eine Vorrichtung zum Aufeinanderstapeln von großflächigen, schwergewichtigen Papierstößen bekannt. Zur Unterstützung beim Transport und somit zur Verringerung der Reibung sind dabei die Auflageflächen mit Bohrungen versehen, die mit Luft beaufschlagt werden und dadurch ein Luftpolster unter den Papierstößen erzeugen.

Bekanntlich kann bei Auflageflächen mit Luftbohrungen zur Erleichterung des Transportes die Erzeugung eines gleichmäßig starken Luftkissens nicht erreicht werden, was auf unkontrolliertes Entweichen der Luft sowie Druckschwankungen zurückzuführen ist. Nicht abgedeckte Luftbohrungen in der Auflagefläche verursachen zudem einen großen Luftmengenverbrauch. Auch kann ein gelegentliches Zusammenbrechen des Luftkissens nicht ausgeschlossen werden, was zu Berührungen der Produkte mit der Auflagefläche führt. Eine dichte Belegung der Auflagefläche mit Luftbohrungen beeinträchtigt die Stabilität der Schiebeplattform und erfordert zusätzliche Versteifungen, wodurch sich die Bauhöhe in unerwünschtem Maße vergrößert.

Zur Transportunterstützung von einzelnen zueinander ausgerichteten Produkten, die zudem noch dünn und von geringem Gewicht sein können, sind Auflageflächen mit Luftbohrungen ungeeignet.

Der Erfindung liegt die Aufgabe zugrunde, eine Vorrichtung zum Stapeln von Produkten, insbesondere von Büchern, Broschuren od. dgl., der genannten Gattung zu schaffen, die bei hoher Funktionssicherheit und Wirtschaftlichkeit eine schonende Behandlung der Produkte gewährleistet und die ferner sicherstellt, daß die vorgegebene Ausrichtung und Formation der zu einer Reihe zusammengestellten Produkte exakt beibehalten wird.

Ausgehend von einer Stapelvorrichtung der genannten Gattung wird die Aufgabe dadurch gelöst, daß die Auflagefläche von Zufuhreinrichtung und Schiebeplattform aus einem hochporösen, durchströmbaren Sinterwerkstoff besteht, dem zur Erzeugung eines Luftpolsters ein gasförmiges Medium zuführbar ist, wobei die Durchströmbarkeit des Sinterwerkstoffes derart gewählt ist, daß die Durchflußmenge des gasförmigen Mediums durch das unbelastete Teil so klein ist, daß der Zufuhrdruck für die Bildung des Luftpolsters ausreicht, andererseits die Durchströmbarkeit für eine ausreichende Tragkraft des Luftpolsters aber groß genug ist, und daß Transportmittel zum Vorbewegen der Produkte über die Auflagefläche der Zufuhreinrichtung vorgesehen sind.

Die Verwendung eines hochporösen, durchströmbaren Sinterwerkstoffes gemäß der Erfindung bietet die Gewähr für eine optimale Luftverteilung und für ein gleichmäßiges Luftpolster aufgrund des vielfach verzweigten Porenlabyrinths im Sinterwerkstoff. Durch die Wahl der Porengröße und des Durchströmungsquerschnitts kann jeder gewünschte Strömungswiderstand hergestellt werden. Auftretende Druckstöße werden abgeschwächt und haben somit keine Auswirkung, ferner werden Strömungen beruhigt und gedrosselt.

Der Einsatz von Sinterwerkstoffen als Auflagefläche für Schiebeplattform und Zufuhreinrichtung beim Abstapeln von Produkten, wie Bücher und Broschuren, hat den Vorteil eines stets gleichmäßig anstehenden Luftpolsters, was insbesondere bei der Handhabung von dünnen produkten entscheidend für die Beibehaltung ihrer exakt zueinander ausgerichteten Formation ist.

Der Einsatz von Sinterwerkstoffen bietet wegen der kontrollierten Luftverteilung nicht nur ein Höchstmaß an Funktionssicherheit, sondern benötigt auch nur einen geringen Energieverbrauch.

Ein Ausführungsbeispiel der Erfindung wird nachfolgend anhand der Zeichnungen näher erläutert. Dabei zeigen

Fig. 1 eine isometrische Darstellung der Vorrichtung zum Stapeln von Büchern, Broschuren od. dgl.

Fig. 2 und 3 in vergrößerter Schnittdarstellung, ebenfalls isometrisch, den Aufbau der Zufuhreinrichtung und der Schiebeplattform.

Die Vorrichtung zum Stapeln von Büchern (1) auf eine Palette (2) besitzt ein Grundgestell (3) mit einem ersten Portal (4a) zur Aufnahme eines höhenverfahrbaren Tragrahmens (5). Unmittelbar an das Portal (4a) schließt sich ein zweites Portal (4b) an, in dem ein Tragrahmen (6) vertikal verfahren wird, der mit dem Tragrahmen (5) gekoppelt ist und gemeinsam mit diesem der Anpassung der Stapelhöhe entsprechend angehoben bzw. abgesenkt wird.

Tragrahmen (5, 6) dienen der Aufnahme von zwei hintereinanderliegenden, höhengleichen Zufuhrbahnen (7, 8), über die auf einem schwenkbaren Förderer (9) mit Ober- und Untergurt (9a, 9b) ankommende Bücher (1) zugeführt werden, wobei sich durch Anlage der Bücher an einem Anschlag (13) eine erste zu stapelnde Reihe bildet und die nachfolgenden Bücher gegen einen Stopper (12) laufen und aufgestaut werden.

Im Tragrahmen (5) quer zur Zufuhrbahn (7) und um eine definierte Strecke höhenverfahrbar gelagert, befindet sich eine Schiebeplattform (10), des weiteren ein Abschubelement (11) sowie eine Ausrichtleiste (26) auf der gegenüberliegenden Seite. In bekannter Weise wird die am Anschlag (13) aufgestaute Buchreihe durch das Abschubelement (11) in Querrichtung von der Zufuhrbahn (7) auf die angrenzende bereitstehende Schiebeplattform (10) geschoben und gelangt zur Anlage an die Ausrichtleiste (26). Unmittelbar darauf laufen die nachfolgenden Bücher (1) nach Absenken des Stoppers (12) und Freigabe der Zufuhrbahn (7) zur Bildung einer neuen Buchreihe gegen den Anschlag (13).

Es erfolgt nun ein Absenken der Schiebeplattform (10) bis dicht über die bereits zu einer Lage gestapelten Buchreihe sowie ein Zurückziehen unter die Zufuhrbahn (7), wodurch die Buchreihe gegen das feststehende Abschubelement (11) von der Schiebeplattform (10) abgedrängt und auf die gestapelte Buchlage abgesetzt wird, nachdem zuvor die Ausrichtleiste (26) hochgefahren wurde. Für ein Zurück, fahren des Abschubelementes (11) über eine eingelaufene Buchreihe hinweg ist eine zusätzliche Vertikalbewegung erforderlich. Nach vollzogenem Abschieben der Buchreihe kehrt die Schiebeplattform (10) in ihre Ausgangslage zurück.

Zum reihenweisen Absetzen der Bücher (1) auf die Palette (2) bzw. auf eine gebildete Buchlage wird die Palette der Breite der Buchreihe entsprechend mittels eines Bodenförderers (14) gemäß Pfeilrichtung vor- und zurückbewegt.

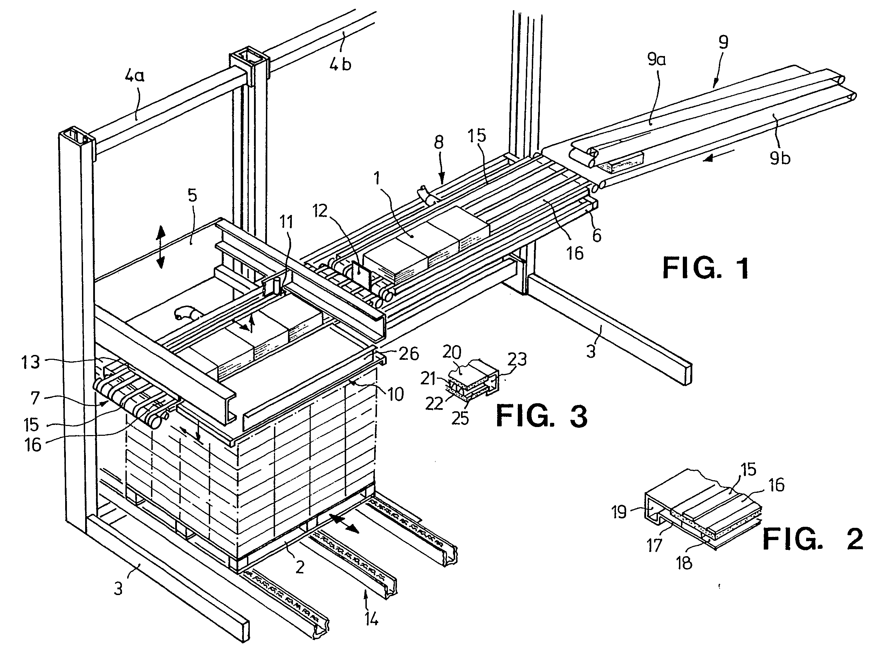

Wie Figur 2 verdeutlicht, werden die beiden Zufuhrbahnen (7, 8) aus Auflageflächen (16) und abständig zueinander liegenden Gurten (15) für die Vorbewegung gebildet, die unter Abstützung auf den Flächen (16) umlaufend angetrieben sind. Zur Verminderung der Reibung zwischen den Büchern (1) und den Auflageflächen (16) bestehen diese aus einem hochporösen, durchströmbaren Sinterwerkstoff, dem zur Erzeugung eines Luftpolsters Luft zugeführt wird.

Die Auflageflächen (16) sind abständig zu einem Konstruktionsteil (17) als Tragelement gehalten und bilden mit diesen einen Luftraum (18), an den sich ein Anschlußkanal (19) anschließt, über den Luft als Trägermedium eingegeben wird.

Ebenso wie die Auflageflächen (16) der beiden Zufuhrbahnen (7, 8) wird auch die Auflagefläche (20) der Schiebeplattform (10) aus demselben Sinterwerkstoff gebildet, um beim Aufschieben und beim Zurückziehen die Reibkräfte in Fortfall gelangen zu lassen.

Wie Figur 3 zeigt, befindet sich die Auflagefläche (20) auf einem Zwischenträger (21), unter dem eine weitere Auflagefläche (22) ebenfalls aus Sinterwerkstoff angeordnet ist. Beide Auflageflächen (20, 22) bilden die Begrenzung für einen Luftraum (25), der über Anschlußkanäle (23) beidseitig der Schiebeplattform (10) mit Luft beaufschlagbar ist.

Die Luftanschlußkanäle für die Zufuhrbahnen (7, 8) und für die Schiebeplattform (10) werden von nicht dargestellten Luftquellen unter Verwendung von Anschlüssen und Leitungssystemen gespeist.

Über das nach unten wirkende, von der Auflagefläche (22) gebildete Luftpolster kann sich die Schiebeplattform (10) auf einer bereits abgesetzten Buchlage abstützen, so daß dadurch ein Abstapeln mit geringstmöglicher Höhendifferenz durchführbar ist, ohne daß Gefahr des Verschiebens der unteren Produkte besteht.

Bei dem als Auflagefläche für die Zufuhrbahnen (7, 8) sowie der Schiebeplattform verwendeten Sinterwerkstoff ist die Durchströmbarkeit derart gewählt, daß die Durchflußmenge des gasförmigen Mediums durch das unbelastete Teil so klein ist, daß der Zufuhrdruck für die Bildung des Luftpolsters ausreicht, andererseits die Durchströmbarkeit für eine ausreichende Tragkraft des Luftpolsters aber groß genug ist.

Die Erfindung beschränkt sich nicht auf das dargestellte und beschriebene Ausführungsbeispiel und läßt zahlreiche Abwandlungen zu.

Beispielsweise können die Gurte (15) in Nuten der Auflageflächen (16) der Zufuhrbahnen (7, 8) im Hinblick auf eine verbesserte Führung eingelassen sein. Ferner kann ein sich über die Gesamtbreite erstreckendes Förderband aus einem luftdurchlässigen Material Verwendung finden. Anstelle der in dem gewählten Ausführungsbeispiel eingesetzten Transportmittel können für die Vorbewegung auch von oben auf die Bücher einwirkende Transportbänder zum Einsatz gelangen.

Letztlich kann auch der Sinterwerkstoff zum Erzeugen eines Unterdruckes in den Auflageflächen von Zufuhreinrichtung (7, 8) und Schiebeplattform (10) Verwendung finden, beispielsweise zum Zweck des Anhaltens der Bücher oder für bestimmtes Positionieren. Hierzu sind die Auflageflächen an eine Saugluftquelle anzuschließen.

**Patentansprüche**

1. Vorrichtung zum Stapeln von empfindlichen Produkten (1), insbesondere von Büchern, Broschüren od. dgl., mit einer Zufuhreinrichtung (7, 8) zur Bildung einer Packgutreihe, mit einer seitlich der Zufuhreinrichtung (7, 8) angeordneten Schiebeplattform (10), auf die die Packgutreihe mittels eines Abschubelementes (11) aufgeschoben wird und die unter die Zufuhreinrichtung (7, 8) fahrbar ist und dabei die Packgutreihe oder ggf. zu einer Lage auf der Schiebeplattform (10) zusammengesetzte Packgutreihen gegen das feststehende Abschubelement (11) auf eine bereits vorhandene Packgutlage abstreift, dadurch gekennzeichnet, daß die Auflagefläche (16, 20) von Zufuhreinrichtung (7, 8) und Schiebeplattform (10) aus einem hochporösen, durchströmbaren Sinterwerkstoff besteht, dem zur Erzeugung eines Luftpolsters ein gasförmiges Medium zuführbar ist, wobei die Durchströmbarkeit des Sinterwerkstoffes derart gewählt ist, daß die Durchflußmenge des gasförmigen Mediums durch das unbelastete Teil so klein ist, daß der Zufuhrdruck für die Bildung des Luftpolsters ausreicht, andererseits die Durchströmbarkeit für eine ausreichende Tragkraft des Luftpolsters aber groß genug ist, und daß Transportmittel (15) zum Vorbewegen der Produkte (1) über die Auflagefläche (16) der Zufuhreinrichtung (7, 8) vorgesehen sind.

2. Vorrichtung nach Anspruch 1, dadurch gekennzeichnet, daß die Transportmittel aus abständig zueinander angeordneten, sich auf der Auflagefläche (16) abstützenden, umlaufend angetriebenen Gurten (15) gebildet sind.

3. Vorrichtung nach Anspruch 2, dadurch gekennzeichnet, daß die Auflagefläche (16) mit Nuten zum Einlassen der Gurte (15) in der Auflagefläche versehen ist.

4. Vorrichtung nach Anspruch 1, dadurch gekennzeichnet, daß die Transportmittel als ein sich auf der Auflagefläche (16) abstützendes, umlaufend angetriebenes Transportband aus einem luftdurchlässigen Material ausgebildet sind.

5. Vorrichtung nach Anspruch 1, dadurch gekennzeichnet, daß die Transportmittel als ein von oben auf die Produkte (1) einwirkendes, umlaufend angetriebenes Transportband ausgebildet sind.

6. Vorrichtung nach Anspruch 1 bis 5, dadurch gekennzeichnet, daß die Schiebeplattform (10) mit einer weiteren nach unten gegen eine bereits abgestapelte Produktlage wirkenden Auflagefläche (22) aus hochporösem Sinterwerkstoff versehen ist.

7. Vorrichtung nach Anspruch 1 bis 6, dadurch gekennzeichnet, daß die Auflagefläche (16) von einem Konstruktionsteil (17) als Tragelement aufgenommen ist und mit diesem einen Luftraum (18) bildet, an den sich ein Anschlußkanal (19) anschließt.

8. Vorrichtung nach Anspruch 1 bis 6, dadurch gekennzeichnet, daß die obere und untere Auflageflächen (20, 22) der Schiebeplattform (10) über einen Zwischenträger (21) abständig gehalten sind und einen Luftraum (25) bilden, an den sich ein Anschlußkanal (23) anschließt.

9. Vorrichtung insbesondere nach Anspruch 1 bis 8, dadurch gekennzeichnet, daß die Auflageflächen (16, 20) zum Erzeugen eines Unterdruckes an eine Saugluftquelle anschließbar sind.

**Revendications**

1. Dispositif pour empiler des produits fragiles (1) notamment des livres, brochures ou analogues, comportant un dispositif d'amenée (7, 8) pour former une rangée de produits à emballer une plateforme translatrice (10) qui est agencée latéralement par rapport au dispositif d'amenée (7, 8), sur laquelle la rangée de produits à emballer est poussée au moyen d'un élément pousseur (11) et qui peut être déplacée en dessous du dispositif d'amenée (7, 8) en déposant alors, sur une couche de produits à emballer déjà présente, contre l'élement pousseur (11) fixe, ladite rangée de produits à emballer ou éventuellement des rangées de produits composées en une couche sur la plateforme translatrice (10), caractérisé par le fait que la surface d'appui (16, 20) du dispositif d'amenée (7, 8) et de la plateforme translatrice (10) est en une matière frittée fortement poreuse perméable aux gaz, à laquelle un milieu gazeux est amené pour former un coussin d'air, la perméabilité adoptée pour cette matière frittée étant telle que le débit du milieu gazeux passant par la partie non chargée soit si faible que la pression d'amennée suffise pour la formation du coussin d'air, et la perméabilité étant d'autre part assez grande pour que le coussin d'air ait une force porteuse suffisante, et par le fait que des moyens de transport (15) son prévus pour faire avancer les produits par-dessus la surface d'appui (16) du dispositif d'amenée (7, 8).

2. Dispositif selon revendication 1, caractérisé par le fait que les moyens de transport sont constitués par des courroies sans fin entraînées (15) agencées à distance les unes des autres et prenant appui sur la surface d'appui (16).

3. Dispositif selon revendication 2, caractérisé par le fait que la surface d'appui (16) est munie de rainures pour l'encastrement des courroies (15) dans la surface d'appui.

4. Dispositif selon revendication 1, caractérisé par le fait que les moyens de transport sont réalisés sous la forme d'une bande transporteuse sans fin, entraînée, en une matière perméable à l'air, prenant appui sur la surface d'appui (16).

5. Dispositif selon revendication 1, caractérisé par le fait que les moyens de transport sont réalisés sous la forme d'une bande transporteuse sans fin, entraînée, agissant sur les produits (1) par le haut.

6. Dispositif selon revendication 1 à 5, caractérisé par le fait que la plateforme translatrice (10) est munie d'une autre surface d'appui (22) en matière frittée fortement poreuse, agissant vers le bas contre une couche de produits déjà empilés.

7. Dispositif selon revendication 1 à 6, caractérisé par le fait que la surface d'appui (16) est reçue par une pièce de construction (17) en tant qu'élément-support et forme avec celle-ci une chambre d'air (18) à laquelle se raccorde un canal de raccordement (19).

8. Dispositif selon revendication 1 à 6, caractérisé par le fait que les surfaces d'appui, supérieur et inférieur (20, 22), de la plateforme translatrice (10) sont maintenues à distance l'une de l'autre par un support intercalaire (21) et forment une chambre d'air (25) à laquelle se raccorde un canal de raccordement (23).

9. Dispositif notamment selon revendication 1 à 8, caractérisé par le fait que les surfaces d'appui (16, 20) sont aptes à être raccordées à une source d'aspiration d'air pour produire une dépression.

**Claims**

1. Apparatus for stacking products (1) that are highly susceptible to damage, especially books, brochures or similar products, said apparatus possessing a feed system (7, 8) which is designed to form a row of the products to be packaged, and further possessing a sliding platform (10) which is located beside the feed system (7, 8), onto which the row of products to be packaged is pushed by means of a push-off element (11), and which is movable to beneath the feed system (7, 8), and at the same time the row of products to be packaged, or, if appropriate, rows of such products that have been assembled to form a layer on the sliding platform (10) are swept off against the push-off element (11), which does not move, and onto a pre-existing layer of the products to be packaged, characterized in that the supporting surface (16, 20) of the feed system (7, 8) and sliding platform (10) is composed of a highly porous sintered material which is permeable to fluid media, and to which a gaseous medium can be supplied in order to produce an air cushion, the permeability of the sintered material being chosen to be such that the quantity of gaseous medium flowing through the unladen portion is so small that the supply pressure is adequate for producing the air cushion, while on the other hand the permeability is still high enough to ensure that the air cushion has adequate carrying power, and in that transport means (15) are provided for moving the products (1) forward, across the supporting surface (16) of the feed system (7, 8).

2. Apparatus according to Claim 1, characterized in that the transport means are formed by belts (15) which are spaced one from another and driven in a manner such that they move on their endless paths while being supported on the supporting surface (16).

3. Apparatus according to Claim 2, characterized in that the supporting surface (16) is provided with grooves so that the belts (15) can be inset into it.

4. Apparatus according to Claim 1, characterized in that the transport means are designed as a transport belt which is composed of an air-permeable material and is driven in a manner such that it moves on its endless path while being supported on the supporting surface (16).

5. Apparatus according to Claim 1, characterized in that the transport means are designed as a transport belt which acts on the products (1) from above and is driven in a manner such that it moves on its endless path.

6. Apparatus according to any of Claims 1 to 5, characterized in that the sliding platform (10) is provided with a further supporting surface (22) which is composed of a highly porous sintered material and acts downwards against a layer of products that have already been stacked.

7. Apparatus according to any of Claims 1 to 6, characterized in that the supporting surface (16) is carried by a structural component (17) which serves as a support element, and with which it forms an airspace (18) that is contiguous with a connection duct (19).

8. Apparatus according to any of Claims 1 to 6, characterized in that the upper and lower supporting surfaces (20, 22) of the sliding platform (10) are held apart by means of an intermediate support (21), and form an airspace (25) that is contiguous with a connection duct (23).

9. Apparatus especially according to any of Claims 1 to 8, characterized in that in order to produce a partial vacuum, the supporting surfaces (16, 20) can be connected to a source of suction.

FIG. 1

FIG. 3

FIG. 2

EP 0 264 402 B1